# FASCICULE DE BREVET EUROPEEN

(11) **EP 3 030 796 B1**
(45) Date de publication et mention de la délivrance du brevet: **08.01.2020**
(21) Numéro de dépôt: 14745159.5
(22) Date de dépôt: 01.08.2014
(51) Int. Cl.: F16B 4/00, F16B 37/04

(54) **ECROU FLOTTANT**
SCHWIMMENDE MUTTER
FLOATING NUT

(30) Priorité: 05.08.2013 FR 1357772
(43) Date de publication de la demande: 15.06.2016
(73) Titulaire: Lisi Aerospace, 75583 Paris Cedex 12 (FR)
(72) Inventeur: VERDIER, Florent, F-92500 Rueil Malmaison (FR)
(74) Mandataire: Ipside
(86) Numéro de dépôt international: PCT/EP2014/066619
(87) Numéro de publication internationale: WO 2015/018756

(56) Documents cités:
- WO-A1-2008/157265
- WO-A2-2007/106801
- DE-A1-102005 036 110
- FR-A1- 2 585 786
- US-A- 4 557 650
- US-A- 4 732 518
- US-A1- 2002 041 790
- US-A1- 2003 091 408
- US-A1- 2005 025 606

## Description

La présente invention se rapporte à un dispositif d'écrou flottant, ou écrou à cage.

Les écrous à cage (voir par exemple DE 10 2005 036 110 A) sont par exemple utilisés dans les domaines automobile ou aéronautique. Ce type de dispositif comporte notamment un support, solidaire d'une structure au niveau d'un alésage. Le support reçoit un élément de fixation tel qu'un écrou. L'écrou peut coopérer avec une tige filetée afin d'assembler la structure à un autre élément. Il existe un jeu entre l'écrou et son support, afin de corriger d'éventuels écarts d'alignement entre l'axe de l'élément assemblé et celui de l'alésage de la structure portant l'écrou.

Plusieurs exemples d'écrous à cage sont notamment décrits dans le document WO2008/157265. Les supports d'écrous sont notamment réalisés dans des matériaux non-métalliques, de type plastique moulé, afin de diminuer le poids total du dispositif. Un tel gain de poids est généralement recherché, particulièrement dans le domaine aéronautique.

Les supports d'écrous du document WO2008/157265 sont assemblés à la structure par des fixations telles que des rivets pleins ou aveugles, voire des systèmes vis/écrous de taille réduite. Ces fixations, généralement métalliques, ajoutent du poids à l'assemblage global et nécessitent le perçage de trous supplémentaires dans la structure, ce qui la fragilise en tenue mécanique et résistance à la corrosion. Ce mode d'assemblage des supports d'écrous conduit aussi à une gamme d'assemblage longue et complexe et, dans le cas des rivets, l'utilisation d'outillages de pose spécifiques. Le mode d'assemblage avec des rivets est aussi problématique dans le cas de structures composites, qui supportent mal le sertissage des rivets. De même, dans le cas des structures épaisses, le ratio longueur / diamètre des trous pose problème au niveau du perçage, ainsi parfois que la disponibilité de rivets appropriés.

Il serait donc intéressant de proposer une alternative d'assemblage simplifiée des supports d'écrou avec la structure, compatible avec des structure épaisses, associant un gain en masse et en temps de pose tout en garantissant le maintien de la solidité de l'ensemble.

La présente invention apporte une solution à ces problèmes. Elle se rapporte à un dispositif d'écrou à cage selon la revendication 1.

Ainsi, le support d'écrou peut être assemblé à une structure par montage en interférence de la portion tubulaire dans l'alésage de ladite structure. Par « montage en interférence », on entend un montage avec jeu négatif. Ce montage en interférence est défini préférentiellement de manière à ce qu'on puisse insérer le support d'écrou dans la structure manuellement.

La portion tubulaire est ensuite définitivement solidarisée à la structure par application d'un adhésif sur ladite portion tubulaire, avant montage. Le montage en interférence combiné à la présence de cannelures permet de maintenir le support en place au contact de la structure pendant la phase de durcissement de l'adhésif. Les cannelures longitudinales permettent une meilleure répartition de l'adhésif, et donc une plus grande solidité de l'ensemble une fois l'adhésif durci.

Ce sont les nervures longitudinales présentant un troisième diamètre, supérieur au premier diamètre de l'alésage, qui créent l'interférence entre la portion tubulaire et l'alésage. Le reste de la surface externe de la portion tubulaire est en contact avec de l'adhésif.

Selon une forme préférentielle de l'invention, la cage comprend une base et une paroi supérieure sensiblement parallèles, ladite base et ladite paroi latérale étant espacées l'une de l'autre et reliées par des parois latérales ouvertes sur au moins un côté, la paroi supérieure comprenant une découpe ouvrant sur le au moins un côté ouvert des parois latérales, ladite découpe étant apte à entourer radialement le corps tubulaire de l'écrou. La cage forme ainsi un logement interne apte à accueillir l'écrou.

Selon une forme préférentielle de l'invention, le logement interne de la cage d'écrou et la découpe de la paroi supérieure sont dimensionnés de sorte à conserver un jeu entre ledit logement interne et la collerette, et entre ladite découpe et le corps d'écrou, dans un plan orthogonal aux axes longitudinaux, afin de corriger d'éventuels écarts d'alignement lors de l'assemblage de l'écrou avec une tige filetée.

Préférentiellement, la cage comporte des moyens de retenue par clipsage de l'écrou en position installée dans le support d'écrou, afin de maintenir l'écrou dans la cage malgré le jeu.

Selon une autre forme préférentielle de l'invention, le dispositif est muni de moyens de blocage en rotation, selon les axes longitudinaux, de l'écrou en position installée dans le support. Préférentiellement, la collerette de l'écrou comprend au moins deux taquets situés sur un bord proximal, et la cage d'écrou comprend une paroi latérale opposée à l'au moins un côté ouvert, ladite paroi latérale comprenant des lumières aptes à accueillir les taquets. Ces lumières et ces taquets bloquent l'écrou en rotation dans le support.

Un autre aspect de l'invention se rapporte à un ensemble pour installation d'un dispositif d'écrou à cage, ledit ensemble comprenant un dispositif d'écrou à cage tel que décrit ci-dessus, ainsi qu'un adhésif de type fluide visqueux polymérisable à déposer dans les cannelures de la portion tubulaire du support d'écrou. De préférence, l'adhésif est un produit bi-composant, à mélanger juste avant l'application sur le support d'écrou et polymérisable à la température ambiante ou dans une étuve.

Un autre aspect de l'invention se rapporte à un procédé d'installation dans une structure d'un dispositif d'écrou à cage tel que décrit ci-dessus. Ledit procédé comprend les étapes suivantes :
- perçage, sur une surface de la structure, d'un alésage adapté à une installation en interférence de la portion tubulaire du support d'écrou,
- répartition d'un fluide adhésif polymérisable sur la surface externe de la portion tubulaire et sur une face de la base de la cage située du côté de ladite portion tubulaire,
- insertion en force de la portion tubulaire dans l'alésage pour une installation en interférence, jusqu'à mise en contact de la base de la cage avec la surface de la structure,
- polymérisation de l'adhésif.

Le dispositif d'écrou à cage, installé selon ce procédé, est solidement fixé à la structure et l'ensemble présente un gain de poids par rapport à une fixation par rivets, telle que décrite dans l'art antérieur.

Un autre aspect de l'invention se rapporte à une structure équipée d'un dispositif d'écrou à cage selon l'invention comportant un alésage dont la paroi présente un diamètre supérieur au deuxième diamètre des cannelures longitudinales de la partie tubulaire du support d'écrou et inférieur au troisième diamètre des nervures longitudinales de la portion tubulaire du support d'écrou, la portion tubulaire du support d'écrou étant insérée dans l'alésage, ainsi qu'un adhésif polymérisé disposé entre lesdites cannelures longitudinales et la paroi de l'alésage.

L'invention sera mieux comprise à la lecture de la description qui suit et à l'examen des figures qui l'accompagnent. Celles-ci sont données à titre indicatif et nullement limitatif de l'invention. Les figures montrent :
- Figure 1 : une vue en perspective d'un dispositif selon un mode de réalisation de l'invention, à l'état dissocié ;
- Figure 2 : une autre vue en perspective d'un élément représenté à la figure 1 ;
- Figure 3 : une vue en perspective du dispositif de la figure 1, à l'état assemblé ;
- Figure 4 : une vue en coupe du dispositif de la figure 3, assemblé à une structure ;
- Figure 5 : une vue en coupe du dispositif et de la structure de la figure 4.

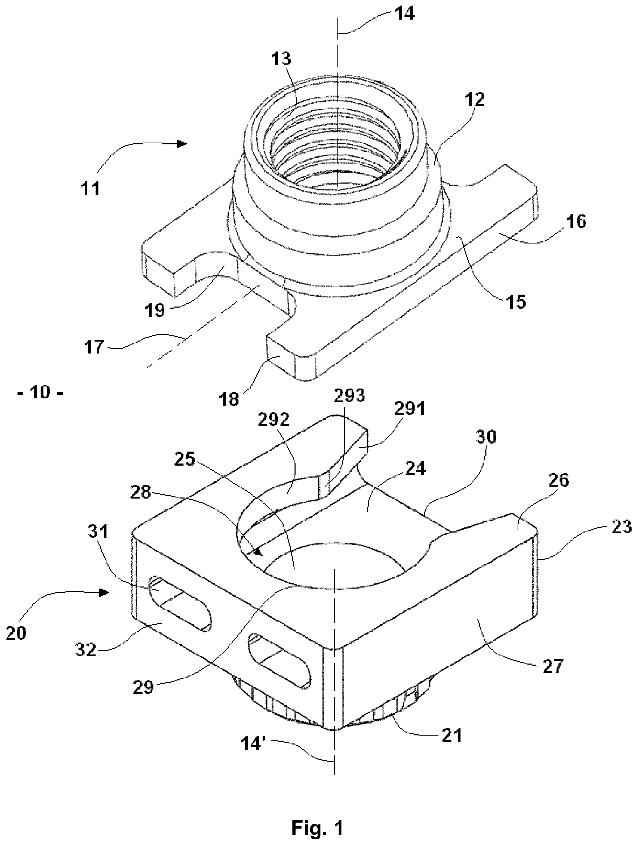

La figure 1 représente une vue éclatée d'un dispositif 10 d'écrou à cage selon un mode de réalisation de l'invention.

Le dispositif 10 comporte un écrou 11 métallique, ledit écrou 11 comprenant un corps 12 tubulaire muni d'un taraudage 13 interne. Le corps 12 tubulaire se développe selon un premier axe 14.

Une extrémité axiale du corps 12 est reliée à une collerette 15, sensiblement située dans un plan orthogonal à l'axe 14. Dans l'exemple de réalisation de l'invention, la collerette 15 a une forme sensiblement rectangulaire ou carrée. La collerette 15 comporte notamment deux bords 16 sensiblement plans, parallèles à l'axe 14 et se développant parallèlement à un deuxième axe 17, perpendiculaire à l'axe 14. Chaque extrémité d'un bord 16 se termine par un taquet 18.

Le dispositif 10 comporte en outre un support 20 d'écrou. Le support 20 est préférentiellement réalisé dans un matériau non métallique, notamment de type matière plastique comme le TORLON®.

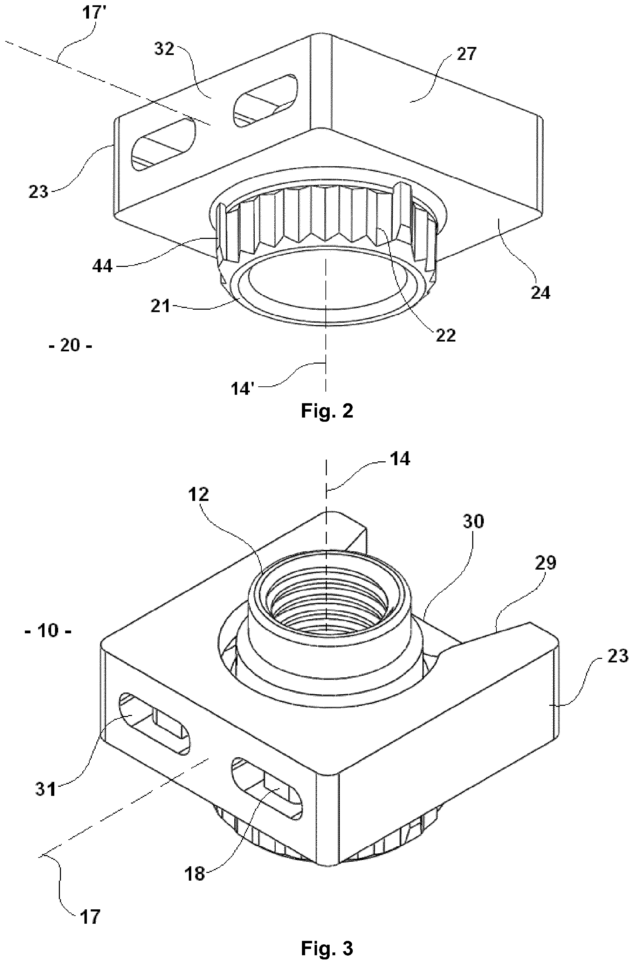

Le support 20 comporte une portion 21 tubulaire se développant selon un troisième axe 14'. Le support 20 est également visible à la figure 2 selon une autre perspective cavalière. Une surface latérale externe de la portion 21 comporte des cannelures 22 parallèles à l'axe 14'.

Une extrémité axiale de la portion 21 tubulaire est reliée à une cage 23 d'écrou. La cage 23 comporte une base 24 sensiblement plane, orthogonale à l'axe 14'. Dans l'exemple de réalisation de l'invention, la base 24 a une forme sensiblement rectangulaire ou carrée. Ladite base est percée d'un orifice 25 à partir duquel se développe la portion 21 tubulaire.

La cage 23 comporte également une paroi supérieure 26, sensiblement parallèle à la base 24 et de forme semblable à ladite base. La base 24 est reliée à la paroi supérieure 26 par deux parois latérales 27 sensiblement planes, se développant parallèlement à un quatrième axe 17', perpendiculaire à l'axe 14'.

La base 24 et les parois (26, 27) forment un logement 28 interne dimensionné de sorte à pouvoir accueillir la collerette 15 et une partie du corps tubulaire 12 de l'écrou 11. La figure 3 montre l'écrou 11 assemblé au support 20 d'écrou, dans une position dite installée. Dans cette position, les axes 14 et 14' coïncident.

La paroi supérieure 26 de la cage 23 comporte une découpe 29, sensiblement en forme de Ω. Comme visible sur la figure 1, la forme en Ω de la découpe 29 comporte des bords 291 rectilignes non parallèles. Les bords 291 partent d'un côté 30 de la cage 23, dépourvu de paroi latérale, et se rapprochent l'un de l'autre en direction de l'axe 14', selon une forme sensiblement trapézoïdale. Chaque bord 291 est relié à une extrémité d'un autre bord 292 de forme semi-circulaire et centré sur l'axe 14'. Le bord 292 semi-circulaire est apte à entourer radialement le corps 12 tubulaire de l'écrou 11.

Pour assembler l'écrou 11 et le support 20 d'écrou, la collerette 15 est placée au côté 30 de la cage 23, de sorte à ce que les axes 17 et 17' coïncident. La collerette 15 est alors translatée selon l'axe 17, coulissant sur la base 24 de sorte à ce que les bords 16 de la collerette et les parois 27 de la cage 23 soient sensiblement parallèles.

Les jonctions 293 des bords 291 et 292 de la découpe 29 sont écartés l'une de l'autre d'une distance égale ou légèrement inférieure à un diamètre de la section correspondante du corps 12 d'écrou. Sous l'effort de translation de l'écrou 11, les parois de la découpe 29 se déforment de manière à se clipser autour du corps 12. Ledit corps 12 est alors entouré par le bord 292 de la découpe 29 et retenu par les clips 293.

La position installée est atteinte lorsque les axes 14 et 14' coïncident, c'est-à-dire que le corps 12 de l'écrou et la portion 21 tubulaire du support sont alignés, de sorte à pouvoir accueillir un élément mâle de fixation, tel qu'une vis.

Les dimensions de la collerette 15 dans le plan orthogonal à l'axe 14 sont légèrement plus faibles que les dimensions du logement 28 dans le même plan. De même, le diamètre du cercle correspondant au bord 292 est légèrement supérieur au diamètre de la section correspondante du corps 12 d'écrou. Ainsi, un jeu existe entre l'écrou 11 et le support 20 dans toutes les directions perpendiculaires à l'axe 14. Ce jeu permet des de compenser des défauts d'alignement lors de l'insertion d'une vis dans le corps 12 de l'écrou et la portion 21 tubulaire du support.

Lors de l'installation de l'écrou 11 dans le support 20, deux taquets 18 de la collerette 15, situés sur un bord 19 proximal, viennent prendre place dans des lumières 31 aménagées dans une troisième paroi latérale 32 de la cage 23, ladite paroi 32 étant opposée au bord 30. Ces taquets et ces lumières permettent de limiter la rotation de l'écrou 11 dans le support 20. Toutefois, il existe un faible jeu entre les lumières et les taquets, pour des ajustements en translation.

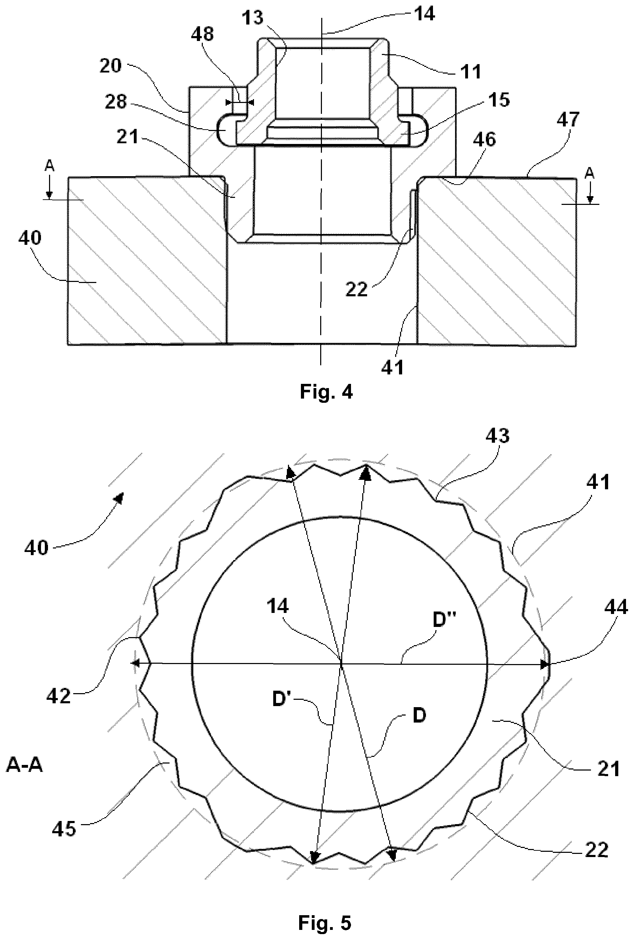

La figure 4 montre une vue en coupe du dispositif 10 assemblé à un panneau 40 de structure. Le dispositif 10 peut permettre de relier le panneau 40 à un autre élément de structure, à l'aide d'un élément mâle de fixation tel qu'une vis filetée coopérant avec le taraudage 13 de l'écrou 11.

Le panneau 40 de structure est muni d'un alésage 41 disposé selon l'axe 14. Les dimensions de l'alésage 41 sont adaptées à un montage en interférence de la portion 21 tubulaire du support 20 d'écrou.

Plus précisément, la figure 5 montre une vue en coupe du panneau 40 et de la portion 21 tubulaire selon le plan A-A représenté à la figure 4 et orthogonal à l'axe 14. La paroi de l'alésage 41, de diamètre D, est représentée en pointillé.

Dans l'exemple de la figure 5, les cannelures 22 longitudinales de la portion 21 tubulaire comportent des arêtes saillantes 42 et des arêtes rentrantes 43. Les arêtes saillantes 42 sont situées sur un même cylindre de base circulaire, centrée sur l'axe 14 et de diamètre D' légèrement inférieur au diamètre de l'alésage 41. Par ailleurs, la surface extérieure de la portion 21 tubulaire comporte trois nervures 44 longitudinales, sensiblement parallèles aux arêtes 42 et 43. Des nervures 44 sont également visibles à la figure 2.

Les nervures 44 sont légèrement saillantes par rapport au cylindre formé par les arêtes 42. Les nervures 44 sont elles-mêmes disposées sur un second cylindre de base circulaire, centrée sur l'axe 14 et de diamètre D" légèrement supérieur au diamètre de l'alésage 41. C'est l'interaction des nervures 44 avec la paroi de l'alésage 41 qui permet la mise en interférence de la portion 21 tubulaire avec ledit alésage 41. L'extrémité des nervures 44 est chanfreinée afin de permettre le centrage et faciliter l'insertion de la portion tubulaire dans la structure.

Selon l'invention, il est possible de faire varier le nombre de nervures 44, en ne prévoyant que deux nervures, ou encore quatre ou cinq nervures, de préférence réparties régulièrement autour de l'axe 14.

Une fois la portion 21 montée en interférence dans l'alésage 41, un espace résiduel 45 persiste entre les cannelures 22 et la paroi dudit alésage. Cet espace 45 reçoit un adhésif destiné à solidariser le support 20 d'écrou avec le panneau 40. Il s'agit par exemple d'un adhésif polymérisable, notamment à deux composants qui sont mélangés juste avant application.

Un procédé d'installation du dispositif 10 sur le panneau 40 comporte par exemple les étapes suivantes : l'alésage 41 est percé dans le panneau 40, avec un diamètre supérieur au diamètre des cannelures 22 et inférieur au diamètre des nervures 44. Puis, un adhésif polymérisable est déposé dans les cannelures 22 de la surface externe de la portion 21 tubulaire. L'adhésif est également déposé sur une face 46 de la base 24 de la cage, la face 46 étant située du côté de la portion 21 tubulaire.

La portion 21 tubulaire est ensuite insérée en force dans l'alésage pour une installation en interférence du fait du jeu négatif entre les nervures 44 et le diamètre D de l'alésage, jusqu'à mise en contact de la face 46 de la base 24 avec une surface 47 du panneau 40. Le maintien en position pendant la phase de durcissement de l'adhésif est ainsi assuré par la mise en interférence avec la structure.

Afin d'optimiser ladite mise en contact, l'alésage 41 peut être chanfreiné au niveau de la surface 47. L'adhésif est ensuite solidifié par polymérisation, à l'air libre ou par cuisson.

On obtient ainsi une structure équipée 40 d'un dispositif 10 d'écrou à cage comportant un alésage 41 dans lequel est insérée la portion tubulaire 21 du support d'écrou, ainsi qu'un adhésif polymérisé disposé entre lesdites cannelures longitudinales 22 et la paroi de l'alésage.

Le panneau 40 équipé du dispositif 10 d'écrou à cage peut alors être assemblé à un autre panneau ou élément de structure, au moyen d'une vis disposée selon l'axe 14 traversant ce panneau ou autre élément de structure, et munie d'un filetage coopérant avec le taraudage 13. Le jeu 48 entre l'écrou 11 et le support 20 permet de compenser les éventuels écarts d'alignement.

## Revendications

1. Dispositif (10) d'écrou à cage destiné à être installé dans une structure (40) comprenant un alésage (41) présentant un premier diamètre (D), ledit dispositif comprenant :
- un écrou (11) comprenant un corps (12) tubulaire muni d'un taraudage (13) interne, ledit corps tubulaire se développant selon un premier axe (14) longitudinal, et une extrémité axiale dudit corps étant reliée à une collerette (15), sensiblement plane et située dans un plan orthogonal à l'axe longitudinal,
- un support (20) d'écrou comprenant une cage (23) d'écrou formant un logement interne (28) apte à accueillir l'écrou, le support comprenant 10 également une portion tubulaire (21), ladite portion tubulaire se développant selon un deuxième axe (14') longitudinal à partir d'un orifice (25) de la base de la cage d'écrou, d'un côté opposé au logement interne, de sorte à ce que la collerette de l'écrou puisse être insérée dans ledit logement interne, dans une position installée telle que le premier et le deuxième axes longitudinaux soient alignés,
**caractérisé en ce qu'**une surface externe de la portion tubulaire du support d'écrou comprend des cannelures (22) longitudinales comportant des arêtes saillantes (42) situées sur un même cylindre présentant un deuxième diamètre (D') destiné à être inférieur au premier diamètre de l'alésage de sorte à ménager un espace résiduel (45) entre les cannelures et une paroi de l'alésage, ledit espace étant destiné à recevoir un adhésif pour solidariser le support (20) d'écrou avec la structure (40), et au moins deux nervures longitudinales (44) présentant un troisième diamètre (D") destiné à être supérieur au premier diamètre (D) de l'alésage pour permettre un montage en interférence de la portion tubulaire (21) dans ledit alésage.

2. Dispositif selon la revendication 1, tel que la cage comprend une base (24) et une paroi supérieure (26) sensiblement parallèles, ladite base et ladite paroi latérale étant espacées l'une de l'autre et reliées par des parois latérales (27, 32) ouvertes sur au moins un côté (30), la paroi supérieure comprenant une découpe (29) ouvrant sur le au moins un côté (30) ouvert des parois latérales, ladite découpe étant apte à entourer radialement le corps tubulaire de l'écrou.

3. Dispositif selon la revendication 1 ou la revendication 2, tel que le support est muni de moyens (16, 31) de blocage en rotation, selon les axes longitudinaux, de l'écrou en position installée dans le support.

4. Dispositif selon la revendication 3, tel que :
- la collerette de l'écrou comprend au moins deux taquets (18) situés sur un bord proximal (19),
- la cage (23) comprend une paroi latérale (32) opposée à l'au moins un côté ouvert, ladite paroi latérale comprenant des lumières (31) aptes à accueillir les taquets.

5. Dispositif selon l'une des revendications précédentes, tel que le logement interne (28) de la cage d'écrou et la découpe (29) de la paroi (26) supérieure sont dimensionnés de sorte à conserver un jeu (48) entre ledit logement interne et la collerette (15), et entre ladite découpe et le corps (12) d'écrou, dans un plan orthogonal aux axes longitudinaux (14, 14').

6. Dispositif selon l'une des revendications précédentes, tel que la cage comporte des moyens (293) de retenue par clipsage de l'écrou en position installée dans le support d'écrou.

7. Ensemble pour installation d'un dispositif d'écrou à cage, comprenant :
- un dispositif (10) d'écrou à cage selon l'une des revendications précédentes,
- un fluide adhésif polymérisable destiné à être déposé dans les cannelures (22) de la portion tubulaire du support d'écrou (20) avant insertion de l'écrou cage (10) dans la structure (40) sur laquelle il doit être monté.

8. Procédé d'installation d'un dispositif d'écrou à cage, selon l'une des revendications 1 à 6, dans une structure (40), ledit procédé comprenant les étapes suivantes :
- perçage, sur une surface (47) de la structure, d'un alésage (41) présentant un premier diamètre (D) supérieur au deuxième diamètre (D') des cannelures (22) et inférieur au troisième diamètre (D") des nervures (44) du support (20) d'écrou,
- répartition d'un fluide adhésif polymérisable sur la surface externe de la portion tubulaire et sur une face (46) de la base de la cage située du côté de ladite portion tubulaire,
- insertion en force de la portion tubulaire dans l'alésage pour une installation en interférence, jusqu'à mise en contact de la base de la cage avec la surface de la structure,
- polymérisation de l'adhésif.

9. Structure équipée d'un dispositif (10) d'écrou à cage selon l'une quelconque des revendications 1 à 6, **caractérisée en ce qu'**elle comporte un alésage (41) dont la paroi présente un diamètre (D) supérieur au deuxième diamètre (D') des cannelures longitudinales (22) de la portion tubulaire du support d'écrou et inférieur au troisième diamètre (D") des nervures longitudinales (44) de la partie tubulaire du support d'écrou, la portion tubulaire (21) du support d'écrou étant insérée dans l'alésage (41), ainsi qu'un adhésif polymérisé disposé entre lesdites cannelures longitudinales (22) et la paroi de l'alésage.

## Patentansprüche

1. Käfigmutter-Vorrichtung (10), die zum Einbau in eine Struktur (40) bestimmt ist, eine Bohrung (41) umfassend, die einen ersten Durchmesser (D) aufweist, wobei die Vorrichtung umfasst:
- eine Mutter (11), die einen rohrförmigen Körper (12) umfasst, der mit einem Innengewinde (13) versehen ist, wobei sich der rohrförmige Körper gemäß einer ersten Längsachse (14) entwickelt, und ein axiales Ende des Körpers mit einem etwa ebenen Kragen (15) verbunden ist, der sich in einer zur Längsachse orthogonalen Ebene befindet,
- einen Mutterhalter (20), umfassend einen Mutterkäfig (23), der eine innere Aufnahme (28) bildet, die imstande ist, die Mutter aufzunehmen, wobei der Halter ebenfalls einen rohrförmigen Abschnitt (21) umfasst, wobei sich der rohrförmige Abschnitt gemäß einer zweiten Längsachse (14') ab einer Öffnung (25) der Basis des Mutterkäfigs auf einer Seite gegenüber der inneren Aufnahme entwickelt, so dass der Kragen der Mutter in die innere Aufnahme in einer Einbauposition einsetzbar ist, die derart ist, dass die erste und die zweite Längsachse fluchten,
**dadurch gekennzeichnet, dass** eine äußere Oberfläche des rohrförmigen Abschnitts des Mutterhalters längliche Riffel (22) umfasst, die hervorstehende Kanten (42) aufweisen, die sich auf demselben Zylinder befinden, aufweisend einen zweiten Durchmesser (D'), der bestimmt ist, kleiner als der erste Durchmesser der Bohrung zu sein, so dass ein überschüssiger Raum (45) zwischen den Riffeln und einer Wand der Bohrung ausgebildet wird, wobei der Raum zur Aufnahme eines Haftmittels bestimmt ist, um den Mutterhalter (20) mit der Struktur (40) fest zu verbinden, und mindestens zwei längliche Rippen (44) einen dritten Durchmesser (D") aufweisen, der bestimmt ist, größer als der erste Durchmesser (D) der Bohrung zu sein, um eine interferierende Montage des rohrförmigen Abschnitts (21) in der Bohrung zu gestatten.

2. Vorrichtung nach Anspruch 1, wobei der Käfig eine Basis (24) und eine obere Wand (26) umfasst, die etwa parallel sind, wobei die Basis und die seitliche Wand voneinander beabstandet sind und durch seitliche Wände (27, 32) verbunden sind, die auf mindestens einer Seite (30) offen sind, wobei die obere Wand einen Ausschnitt (29) umfasst, der auf die mindestens eine offene Seite (30) der seitlichen Wände öffnet, wobei der Ausschnitt imstande ist, den rohrförmigen Körper der Mutter radial zu umgeben.

3. Vorrichtung nach Anspruch 1 oder Anspruch 2, wobei der Halter mit Rotationsblockademitteln (16, 31) gemäß den Längsachsen der Mutter in im Halter eingebauter Position versehen ist.

4. Vorrichtung nach Anspruch 3, wobei:
- der Kragen der Mutter mindestens zwei Nasen (18) umfasst, die sich auf einem proximalen Rand (19) befinden,
- der Käfig (23) eine seitliche Wand (32) gegenüber mindestens einer offenen Seite umfasst, wobei die seitliche Wand Schlitze (31) umfasst, die imstande sind, die Nasen aufzunehmen.

5. Vorrichtung nach einem der vorangehenden Ansprüche, wobei die innere Aufnahme (28) des Mutterkäfigs und der Ausschnitt (29) der oberen Wand (26) derart bemessen sind, dass ein Spiel (48) zwischen der inneren Aufnahme und dem Kragen (15) und zwischen dem Ausschnitt und dem Mutterkörper (12) in einer zu den Längsachsen (14, 14') orthogonalen Ebene verbleibt.

6. Vorrichtung nach einem der vorangehenden Ansprüche, wobei der Käfig Haltemittel (293) durch Rasten der Mutter in im Mutterhalter eingebauter Position aufweist.

7. Einheit für den Einbau einer Käfigmutter-Vorrichtung, umfassend:
- eine Käfigmutter-Vorrichtung (10) nach einem der vorangehenden Ansprüche,
- ein polymerisierbares Haftfluid, das bestimmt ist, vor dem Einsetzen der Käfigmutter (10) in die Struktur (40), auf der sie angebracht werden muss, in den Riffeln (22) des rohrförmigen Abschnitts des Mutterhalters (20) aufgebracht zu sein.

8. Verfahren zum Einbau einer Käfigmutter-Vorrichtung nach einem der Ansprüche 1 bis 6 in eine Struktur (40), wobei das Verfahren die folgenden Schritte umfasst:
- Bohren, auf einer Oberfläche (47) der Struktur, einer Bohrung (41), die einen ersten Durchmesser (D) aufweist, der größer als der zweite Durchmesser (D') der Riffel (22) und kleiner als der dritte Durchmesser (D") der Rippen (44) des Mutterhalters (20) ist,
- Verteilen eines polymerisierbaren Haftfluids auf der äußeren Oberfläche des rohrförmigen Abschnitts und auf einer Fläche (46) der Basis des Käfigs, die sich auf der Seite des rohrförmigen Abschnitts befindet,
- Einpassen des rohrförmigen Abschnitts in die Bohrung für einen interferierenden Einbau bis zur Herstellung des Kontakts der Basis des Käfigs mit der Oberfläche der Struktur,
- Polymerisieren des Haftmittels.

9. Struktur, ausgestattet mit einer Käfigmutter-Vorrichtung (10) nach einem der Ansprüche 1 bis 6, **dadurch gekennzeichnet, dass** sie eine Bohrung (41) aufweist, deren Wand eine Durchmesser (D) aufweist, der größer als der zweite Durchmesser (D') der länglichen Riffel (22) des rohrförmigen Abschnitts des Mutterhalters und kleiner als der dritte Durchmesser (D") der länglichen Rippen (44) des rohrförmigen Teils des Mutterhalters ist, wobei der rohrförmige Abschnitt (21) des Mutterhalters in die Bohrung (41) eingesetzt sowie ein polymerisiertes Haftmittel zwischen den länglichen Riffeln (22) und der Wand der Bohrung angeordnet ist.

## Claims

1. Cage nut device (10) intended to be fitted in a structure (40) comprising a bore (41) having a first diameter (D), said device comprising:
- a nut (11) comprising a tubular body (12) provided with an internal thread (13), said tubular body developing along a first longitudinal axis (14), and an axial end of said body connected to a collar (15), which is substantially planar and situated in an orthogonal plane to the longitudinal axis,
- a nut support (20) comprising a nut cage (23) forming an internal housing (28) suitable for accommodating the nut, the support also comprising a tubular portion (21), said tubular portion developing along a second longitudinal axis (14') from an orifice (25) of the base of the nut cage, on a side opposite the internal housing, such that the collar of the nut can be inserted into said internal housing, in a fitted position such that the first and second longitudinal axes are aligned,
**characterised in that** an external surface of the tubular portion of the nut support comprises longitudinal splines (22) including protruding edges (42) situated on the same cylinder having a second diameter (D') intended to be less than the first diameter of the bore so as to provide a residual gap (45) between the splines and a wall of the bore, said gap being intended to receive an adhesive to secure the nut support (20) with the structure (40), and at least two longitudinal ribs (44) having a third diameter (D") intended to be greater than the first diameter (D) of the bore to enable an interference fit of the tubular portion (21) in said bore.

2. Device according to claim 1, such that the cage comprises a base (24) and a top wall (26) that are substantially parallel, said base and said side wall being spaced apart from one another and connected by side walls (27, 32) open on at least one side (30), the top wall comprising a cut area (29) opening on the at least one open side (30) of the side walls, said cut area being suitable for surrounding the tubular body of the nut radially.

3. Device according to claim 1 or claim 2, such that the support is provided with means (16, 31) for locking the nut in rotation, along the longitudinal axes, in the fitted position in the support.

4. Device according to claim 3, such that:
- the collar of the nut comprises at least two tappets (18) situated on a proximal edge (19),
- the cage (23) comprises a side wall (32) opposite the at least one open side, said side wall comprising slots (31) suitable for accommodating the tappets.

5. Device according to one of the preceding claims, such that the internal housing (28) of the nut cage and the cut area (29) of the top wall (26) are dimensioned so as to retain a gap (48) between said internal housing and the collar (15), and between said cut area and the nut body (12), in an orthogonal plane to the longitudinal axes (14, 14').

6. Device according to one of the preceding claims, such that the cage includes means (293) for retaining the nut by clipping in the fitted position in the nut support.

7. Assembly for fitting a cage nut device, comprising:
- a cage nut device (10) according to one of the preceding claims,
- a polymerisable adhesive fluid intended to be deposited in the splines (22) of the tubular portion of the nut support (20) before inserting the cage nut (10) into the structure (40) whereon it is to be mounted.

8. Method for fitting a cage nut device, according to one of claims 1 to 6, in a structure (40), said method comprising the following steps:
- drilling, on a surface (47) of the structure, a bore (41) having a first diameter (D) greater than the second diameter (D') of the splines (22) and less than the third diameter (D") of the ribs (44) of the nut support (20),
- distributing a polymerisable adhesive fluid on the outer surface of the tubular portion and on one face (46) of the base of the cage situated on the side of said tubular portion,
- force-fitting the tubular portion in the bore for an interference fit, until the base of the cage is contacted with the surface of the structure,
- polymerising the adhesive.

9. Structure equipped with a cage nut device (10) according to any one of claims 1 to 6, **characterised in that** it includes a bore (41) wherein the wall has a diameter (D) greater than the second diameter (D') of the longitudinal splines (22) of the tubular portion and less than the third diameter (D") of the longitudinal ribs (44) of the tubular portion of the nut support, the tubular portion (21) of the nut support being inserted into the bore (41), as well as a polymerised adhesive disposed between said longitudinal splines (22) and the wall of the bore.
